# EUROPÄISCHE PATENTSCHRIFT

(11) **EP 3 460 242 B1**
(45) Veröffentlichungstag und Bekanntmachung des Hinweises auf die Patenterteilung: **16.12.2020**
(21) Anmeldenummer: 18192634.6
(22) Anmeldetag: 05.09.2018
(51) Int. Cl.: F04B 13/02, B01F 15/02, B01F 15/04, F04B 23/02, F04B 49/03, F04B 49/06

(54) **VERFAHREN ZUR STEUERUNG EINES PUMPENSYSTEMS SOWIE PUMPENSYSTEM**
METHOD FOR CONTROLLING A PUMP SYSTEM AND PUMP SYSTEM
PROCÉDÉ DE COMMANDE D'UN SYSTÈME DE POMPE AINSI QUE SYSTÈME DE POMPE

(30) Priorität: 22.09.2017 DE 102017216812
(43) Veröffentlichungstag der Anmeldung: 27.03.2019
(73) Patentinhaber: WIWA WILHELM WAGNER GMBH & CO. KG, 35633 Lahnau (DE)
(72) Erfinder: TURCZAK, Peter, 35578 Wetzlar (DE); SCHERER, Dirk, 35633 Lahnau (DE)
(74) Vertreter: advotec.

(56) Entgegenhaltungen:
- US-A- 3 251 508
- US-A- 3 869 067
- US-A1- 2004 141 409

## Beschreibung

Die Erfindung betrifft ein Verfahren zur Steuerung eines Pumpensystems sowie ein Pumpensystem, wobei Mehrkomponentenmaterial unter Druck mit einem Mischer und einer Spritzpistole des Pumpensystems ausgegeben wird, wobei Komponentenmaterial mit zumindest zwei Pumpen des Pumpensystems gefördert wird, wobei das Komponentenmaterial mit jeweils den Pumpen zugeordneten Flüssigkeitsspeichern des Pumpensystems gespeichert wird, wobei das Komponentenmaterial mit jeweils den Pumpen zugeordneten Dosierventilen des Pumpensystems dosiert wird, wobei mittels einer Steuereinheit des Pumpensystems das Pumpensystem gesteuert wird.

Derartige Pumpensysteme und Verfahren zur Steuerung beziehungsweise zum Betrieb von Pumpensystemen sind aus dem Stand der Technik hinreichend bekannt und werden regelmäßig zur Oberflächenbeschichtung beziehungsweise zum Auftragen oder Versprühen eines Mehrkomponentenmaterials auf einer Oberfläche eingesetzt. Das Mehrkomponentenmaterial besteht dabei aus zumindest zwei Komponentenmaterialien, beispielsweise einem Stammkomponentenmaterial und einem Zuführkomponentenmaterial beziehungsweise Härterkomponentenmaterial, wobei diese Komponentenmaterialien jeweils für sich getrennt in Flüssigkeitsspeichern aufbewahrt werden. Jeder Flüssigkeitsspeicher ist einer Pumpe zur Förderung des jeweiligen Komponentenmaterials zugeordnet. Beispielsweise werden hier pneumatisch angetriebene Kolbenpumpen eingesetzt, wobei jedoch auch andere Arten von Pumpen Verwendung finden können. Mittels der jeweiligen Pumpen werden die Komponentenmaterialien zu einem sogenannten Mischer gefördert und innerhalb des Mischers derart durchmischt, dass das so ausgebildete Mehrkomponentenmaterial aushärten kann. Von dem Mischer wird mittels der Pumpe das Mehrkomponentenmaterial unter Druck zu einer sogenannten Spritzpistole gefördert. Die Spritzpistole muss dabei nicht zwangsläufig eine Pistolenform aufweisen, sondern es kann sich um jede Art von Düse handeln, mit der das Mehrkomponentenmaterial auf eine Oberfläche durch Zerstäubung versprüht werden kann. Dies kann vorzugsweise unter Verwendung von Druckluft erfolgen. Optional können auch ein oder mehrere Erhitzer zur Temperierung des Komponentenmaterials vorgesehen sein.

Weiter umfassen Pumpensysteme stets eine Steuereinheit, die in Art einer Bedieneinrichtung ausgebildet sein kann, so dass eine Bedienperson das Pumpensystem bedienen beziehungsweise steuern kann. Über die Bedieneinrichtung beziehungsweise die Steuereinheit kann von einer Bedienperson beispielsweise ein Mischungsverhältnis der Komponentenmaterialien vorgegeben werden. Eine derartige Einstellung erfolgt regelmäßig über eine Variation der jeweiligen Fördermenge der Pumpen. Die Steuereinheit kann daher auch verschiedene Sensoren, Durchflussmengenmesser, Volumenmesser oder ähnliche Mittel zur Bestimmung und Beeinflussung einer Fördermenge der Pumpen aufweisen. Insbesondere ist jeder Pumpe ein Dosierventil zugeordnet, über das eine Durchflussmenge beziehungsweise ein Volumenstrom des jeweiligen Komponentenmaterials so angepasst werden kann, dass das gewünschte Mischungsverhältnis erzielt wird. Beispielsweise kann ein Stammkomponentenmaterial mit einer Pumpe gefördert werden, wobei das zugehörige Dosierventil vollständig geöffnet ist. Ein Zuführkomponentenmaterial, wie beispielsweise ein Härter, kann dann mit einer weiteren Pumpe gefördert werden, wobei das zugehörige Dosierventil beispielsweise getaktet geöffnet und geschlossen wird. Der Stammkomponente wird dann die Zuführkomponente diskontinuierlich zugeführt und in dem Mischer zu dem Mehrkomponentenmaterial vermischt. Die Öffnung beziehungsweise Taktung der Dosierventile erfolgt dann mittels der Steuereinheit entsprechend dem gewünschten Mischungsverhältnis. Dabei kann auch eine Regelung vorgesehen sein, die von der Steuereinheit gemessene Ist-Volumenströme von Komponentenmaterial an Soll-Volumenströme nach der Vorgabe des jeweiligen Mischungsverhältnisses anpasst. Ein derartiges Pumpensystem ist unter anderem aus der DE 10 2012 010 544 A1 bekannt.

Pumpensysteme können transportabel oder auch stationär installiert ausgebildet sein, und über mehr als zwei Pumpen und Flüssigkeitsspeicher verfügen. Diese Pumpensysteme können beispielsweise in einer Lackiereinlage eingesetzt werden, wobei es dann auch möglich ist, eine Vielzahl von Komponentenmaterialien, wie beispielsweise unterschiedliche Farben, gleichzeitig im Einsatz zu haben. Wenn ein Wechsel einer Farbe vorgenommen werden soll, kann mittels der Steuereinheit auch eine Spülung der betreffenden Förderleitungen beziehungsweise des Mischers im Rahmen einer Spülfunktion erfolgen.

Die bekannten Pumpensysteme sind stets so ausgelegt, dass mit einer Pumpe eine Stammkomponente und mit einer oder mehreren weiteren Pumpen eine Zuführkomponente gefördert wird. Ein Volumenstrom der Zuführkomponente kann dabei auch nach einem Volumenstrom der Stammkomponente geregelt werden, um das gewünschte Mischungsverhältnis zu erzielen. Die jeweiligen Pumpen und Förderleitungen sind daher zur Förderung des jeweiligen Komponentenmaterials jeweils unterschiedlich ausgebildet. Insbesondere ist die Steuereinheit daran angepasst, dass unterschiedliche Komponentenmaterialien gefördert werden sollen, beispielsweise mit einer Messung einer Durchflussmenge beziehungsweise eines Volumenstroms einer Zuführkomponente. Die Steuereinheit ist daher stets immer für die Art des mit den Pumpen zu fördernden Komponentenmaterials ausgebildet. Soll beispielsweise ein Pumpensystem um eine weitere Farbe beziehungsweise ein Komponentenmaterial mit einer weiteren Pumpe, einem weiteren Flüssigkeitsspeicher und einem weiteren Dosierventil erweitert werden, muss die Steuereinheit sofern möglich angepasst und gegebenenfalls auch durch eine neue Steuereinheit ersetzt werden.

Die bekannten Steuereinheiten umfassen regelmäßig elektrische oder elektronische Bauteile mit beispielsweise Einrichtungen zur Datenverarbeitung, Anzeigeelementen und Bedienelementen. Aus Gründen des Explosionsschutzes müssen im Bereich der Spritztechnik derartige Bauteile wie auch Schalter und elektrische Stellelemente als eine druckgekapselte Einheit nach den ATEX-Leitlinien zum Explosionsschutz gemäß Produktrichtlinie 2014/34/EU und Betriebsrichtlinien 1999/92/EG ausgebildet sein, damit ein sicherer Betrieb des Pumpensystems in einer explosionsgefährdeten Atmosphäre möglich ist. Die Steuereinheit ist daher in einem verfüllten, vergossenen oder gekapselten und dicht abgeschlossenen Gehäuse aufgenommen, wobei die Dosierventile an den Förderleitungen dann beispielsweise pneumatisch, über eine Druckluftleitung von der Steuereinheit zum jeweiligen Dosierventil, betätigt werden. Innerhalb des Gehäuses der Steuereinheit sind die elektrischen Bauteile miteinander verkabelt. Beispielsweise kann eine elektrische Steuervorrichtung der Steuereinheit mit elektrisch betätigbaren Steuerventilen für Druckluft zur Betätigung der Dosierventile verkabelt sein. Die Steuervorrichtung kann insbesondere eine SPS-Steuerung sein.

Entsprechend der ATEX-Produktrichtlinie sind von Herstellern von Pumpensystemen grundlegende Gesundheits- und Sicherheitsanforderungen zu erfüllen und durch entsprechende Konformitätsbewertungsverfahren nachzuweisen, was insbesondere die Ausbildung der Steuereinheit betrifft. Soll nun ein bestehendes Pumpensystem um eine weitere Farbe beziehungsweise Pumpe erweitert werden, muss auch die Steuereinheit mit elektrischen Bauelementen zur Betätigung eines weiteren Dosierventils erweitert werden. Gegebenenfalls ist dann ein Gehäuse der Steuereinheit beziehungsweise ein Schaltschrank nicht mehr ausreichend groß für eine derartige Erweiterung, was eine Herstellung einer vollkommen neuen Steuereinheit erforderlich macht. Auch ist ein Nachweis über ein dann erforderliches Konformitätsbewertungsverfahren zur Erfüllung der ATEX-Produktrichtlinie erneut durchzuführen. Daher ist auch eine individuelle Anpassung einer Steuereinheit an unterschiedliche Pumpensysteme bei der Herstellung eines Pumpensystems mit einem hohen Aufwand verbunden. Auch ist eine Erweiterung eines Pumpensystems mit weiteren Pumpen nicht immer wirtschaftlich sinnvoll, insbesondere dann, wenn die Steuereinheit vollständig ausgetauscht werden muss.

Die US 3 869 067 A offenbart ein Pumpensystem zum Ausgeben von Mehrkomponentenmaterial unter Druck, wobei das Pumpensystem einen Mischer und zwei Pumpen zur Förderung von Komponentenmaterial und jeweils zugeordnete Dosierventile zur Dosierung und Flüssigkeitsspeicher zur Speicherung von Komponentenmaterial aufweist, wobei das Pumpensystem eine Steuereinheit aufweist, wobei mittels der Steuereinheit das Pumpensystem steuerbar ist.

Weiter geht aus der Druckschrift US 2004/0141409 A1 eine Vorrichtung zum Mischen von Flüssigkeiten hervor, welche in Flüssigkeitsleitungen integrierte Dosierventile sowie den Dosierventilen zugeordnete Kontrollvorrichtungen, welche jeweils mit einer Messvorrichtung zur Messung eines an einem Dosierventil anliegenden Ist-Volumenstroms gekoppelt sind, aufweist. Dabei dienen die Kontrollvorrichtungen zur Erzeugung eines den Ist-Volumenstrom beschreibenden Kontrollsignals, welches über einen Datenbus an eine Steuervorrichtung übertragen wird. Zudem kann mittels der Steuervorrichtung ein Mischungsverhältnis der Flüssigkeiten geregelt werden.

Der vorliegenden Erfindung liegt daher die Aufgabe zugrunde, ein Verfahren zur Steuerung eines Pumpensystems sowie ein Pumpensystem vorzuschlagen, welches einen flexiblen Einsatz des Pumpensystems bei gleichzeitig geringen Herstellkosten ermöglicht.

Diese Aufgabe wird durch ein Verfahren mit den Merkmalen des Anspruchs 1 und ein Pumpensystems mit den Merkmalen des Anspruchs 10 gelöst.

Bei dem erfindungsgemäßen Verfahren zur Steuerung eines Pumpensystems wird Mehrkomponentenmaterial unter Druck mit einem Mischer und einer Spritzpistole des Pumpensystems ausgegeben, wobei Komponentenmaterial mit zumindest zwei Pumpen des Pumpensystems gefördert wird, wobei das Komponentenmaterial mit jeweils den Pumpen zugeordneten Flüssigkeitsspeichern des Pumpensystems gespeichert wird, wobei das Komponentenmaterial mit jeweils den Pumpen zugeordneten Dosierventilen des Pumpensystems dosiert wird, wobei mittels einer Steuereinheit des Pumpensystems das Pumpensystem gesteuert wird, wobei die Dosierventile jeweils mit einer elektrischen Regelvorrichtung der Steuereinheit geregelt werden, wobei ein Mischungsverhältnis der Komponentenmaterialien mit einer Steuervorrichtung der Steuereinheit geregelt wird, wobei die Regelvorrichtungen mittels der Steuervorrichtung geregelt werden, wobei ein Ist-Volumenstrom von Komponentenmaterial der jeweiligen Pumpe gemessen wird, wobei die Steuervorrichtung die jeweiligen Ist-Volumenströme erfasst und den Regelvorrichtungen jeweils einen Soll-Volumenstrom entsprechend dem Mischungsverhältnis vorgibt.

Demnach weist die Steuereinheit beziehungsweise die Bedieneinrichtung eine elektrische Regelvorrichtung für jede Pumpe auf. Unter dem Begriff Pumpe wird hier jede Art von Fördersystem verstanden, welches prinzipiell geeignet ist Komponentenmaterial zu fördern, wie beispielsweise Druckbehälter, Membranpumpen oder Kolbenpumpen. Die Regelvorrichtungen sind dazu ausgebildet, das jeweilige Dosierventil zu regeln und damit einen Volumenstrom von Komponentenmaterial durch eine Einstellung oder Bestätigung des Dosierventils zu regeln. Weiter weist die Steuereinheit die Steuervorrichtung auf, die ihrerseits die Regelvorrichtungen regelt. Die Steuervorrichtung kann dann beispielsweise ein gewünschtes Mischungsverhältnis des Komponentenmaterials dadurch einstellen beziehungsweise regeln, dass eine Menge an Komponentenmaterial, beispielsweise ein Volumenstrom, an die jeweiligen Regelvorrichtungen übermittelt wird, die ihrerseits durch Betätigung der Dosierventile den jeweiligen Volumenstrom zur Verfügung stellen. Im Unterschied zu dem aus dem Stand der Technik bekannten Verfahren mit einer Steuereinheit ist hier die Steuereinheit aus einer Steuervorrichtung mit zumindest Regelvorrichtungen ausgebildet, wobei jedem Dosierventil beziehungsweise jeder Pumpe stets eine Regelvorrichtung zugeordnet ist. Unter einer Zuordnung wird hier die Anordnung des Dosierventils in einer Dosierleitung der jeweiligen Pumpe sowie die Einstellung des Dosierventils mit der jeweiligen Regelvorrichtung verstanden. Dadurch, dass die Steuereinheit dann mehrteilig aufgebaut ist und insbesondere jede Pumpe über ein Dosierventil mit einer Regelvorrichtung verfügt, wird es möglich die Pumpen prinzipiell unabhängig voneinander zu betreiben. Eine besondere Anpassung der Steuereinheit an eine Stammkomponente oder eine Zuführkomponente ist dann nicht mehr erforderlich, da jede der Pumpen wahlweise mit der Stammkomponente oder der Zuführkomponente verwendet werden kann. Darüber hinaus ist es möglich für unterschiedlichste Pumpensysteme eine einheitliche Steuervorrichtung und/oder Regelvorrichtung zu verwenden, wodurch eine Erweiterung eines Pumpensystems vereinfacht wird. So kann die Regelvorrichtung und/oder die Steuervorrichtung alleine hinsichtlich ihrer Konformität bezüglich der ATEX-Richtlinien bewertet werden, sodass sich dann aus einer Zusammenstellung der Steuervorrichtung mit den Regelvorrichtungen eine bereits ATEX-konforme Steuereinheit ergibt. Die Kosten für die Herstellung und Erweiterung von Pumpensystemen können durch die individuelle Regelung der Dosierventile, welche eine Verwendung von jeweils elektrischen Regelvorrichtungen ermöglicht, erheblich gesenkt werden.

Erfindungsgemäß wird ein Ist-Volumenstrom von Komponentenmaterialien der jeweiligen Pumpe gemessen, wobei die Steuervorrichtung die jeweiligen Ist-Volumenströme erfasst und den Regelvorrichtungen jeweils einen Soll-Volumenstrom entsprechend dem Mischungsverhältnis vorgibt. Der Ist-Volumenstrom kann dann beispielsweise mittels eines Sensors an einer Förderleitung der jeweiligen Pumpe und/oder eines Wegmesssensors an einer Pumpe gemessen werden. Prinzipiell ist es ausreichend, wenn alleine ein Ist-Volumenstrom eines Komponentenmaterials gemessen wird, sodass dann von der Steuervorrichtung die die Mischungsverhältnisse entsprechenden Soll-Volumenströme an die Regelvorrichtungen der übrigen Komponentenmaterialien übermittelt werden können. Eine genauere Einstellung eines Mischungsverhältnisses kann sich jedoch bereits dadurch ergeben, dass alle Ist-Volumenströme von Komponentenmaterialien gemessen und an die Steuervorrichtung übermittelt werden. Prinzipiell ist es dabei unerheblich, welches der Komponentenmaterialien ein Stammkomponentenmaterial oder ein Zuführkomponentenmaterial ist.

Somit kann die Steuervorrichtung als ein Führungsregler einer Kaskadenregelung die Regelvorrichtungen regeln. Die Steuervorrichtung, welche eine Einrichtung zur Datenverarbeitung, sowie Bedien- und Anzeigeelemente umfassen kann, kann so ausgebildet sein, dass mittels der Steuervorrichtung zumindest Grundfunktionen des Pumpensystems von einer Bedienperson ausgeführt werden können. Insbesondere kann der Steuervorrichtung ein Mischungsverhältnis von Komponentenmaterial von der Bedienperson oder über eine externe Kommunikationsverbindung vorgegeben werden. Weiter können Mischungsverhältnisse von Komponentenmaterialien bereits in der Steuervorrichtung gespeichert sein. Die Steuervorrichtung kann die Ausgabe von Mehrkomponentenmaterial nach einem Soll-Mischungsverhältnis regeln. Beispielsweise dadurch, dass eine Führungsgröße, wie ein Volumenstrom eines Komponentenmaterials gemessen, und ein Ist-Mischungsverhältnis entsprechend angepasst wird. Die Steuervorrichtung regelt dabei nicht direkt die Dosierventile, sondern kann ein Signal an die jeweiligen elektrischen Regelvorrichtungen übermitteln, die ihrerseits den oder die Volumenströme an Komponentenmaterial über die jeweiligen Dosierventile anpassen. Die Regelvorrichtungen können daher jeweils auch Mittel zur Datenverarbeitung umfassen. In einer Ausführungsform kann dann von der Steuervorrichtung ein Computerprogrammprodukt und von den Regelvorrichtungen ebenfalls ein weiteres Computerprogrammprodukt ausgeführt werden, wobei die jeweiligen Computerprogrammprodukte dann miteinander kommunizieren können. So kann das Computerprogrammprodukt der Steuervorrichtung dem weiteren Computerprogrammprodukt der Regelvorrichtung beispielsweise einen Soll-Volumenstrom in Abhängigkeit eines vorgegebenen Mischungsverhältnisses übermitteln. Unter einem Computerprogrammprodukt wird hier eine softwaretechnische Anwendung beziehungsweise Software verstanden.

Mittels eines Datenbusses der Steuereinheit können Daten zwischen der Steuervorrichtung und den Regelvorrichtungen ausgetauscht werden. Der Datenbus kann ein Feldbus oder auch jede Art eines Verbindungsnetzwerks wie RS485 oder Standards zur Datenübertragung wie Bluetooth, ZigBee, WLAN, GMS, UMTS, LTN umfassen. Durch den Austausch von Daten zwischen der Steuervorrichtung und den Regelvorrichtungen über den Datenbus wird es möglich eine Herstellung des Pumpensystems wesentlich zu vereinfachen, da dann eine umständliche Verkabelung der Steuereinheit beziehungsweise in einem Schaltschrank nicht mehr erforderlich ist. Jedes elektrische Bauteil des Pumpensystems kann über den Datenbus an die Steuervorrichtung angeschlossen werden. So ist es dann auch möglich mittels des Datenbusses Daten zwischen der Steuervorrichtung und den Pumpen auszutauschen. Wenn die Pumpen Kolbenpumpen sind, können diese über einen Wegmesssensor verfügen, über den von der Steuervorrichtung eine Ausgabemenge an Komponentenmaterial anhand einer Stellung eines Kolbens der Pumpe ermittelt werden kann. Auch dieser Wegmesssensor kann über den Datenbus mit der Steuervorrichtung verbunden sein.

Ein Ist-Volumenstrom zumindest eines der Komponentenmaterialien an einem Dosierventil kann mittels eines Sensors ermittelt beziehungsweise gemessen und an die Steuervorrichtung und/oder Regelvorrichtung übermittelt werden. Der Sensor kann ein Durchflussmengensensor, wie eine Zahnradmesszelle, in einer Förderleitung einer Pumpe oder auch ein Wegmesssensor an einer Pumpe, wie ein Wegmesssystem oder ein Umdrehungszähler, oder jedes andere geeignete Mittel zur Messung der Durchflussmenge sein. Mit dem Sensor kann dann der tatsächliche Volumenstrom, der das jeweilige Dosierventil passiert, und damit eine Ausgabemenge des betreffenden Komponentenmaterials in einem Zeitabschnitt, bestimmt werden. Dieser Ist-Volumenstrom kann von der Steuervorrichtung zur Regelung der Regelvorrichtungen und/oder der jeweiligen Regelvorrichtung zur Regelung des zugeordneten Dosierventils verwendet werden.

Folglich kann die Steuervorrichtung den Ist-Volumenstrom des Komponentenmaterials über die Regelvorrichtung des Dosierventils regeln.

Beispielsweise kann die Steuervorrichtung der Regelvorrichtung einen Soll-Volumenstrom vorgeben, wobei dann die Regelvorrichtung die Einstellung des Dosierventils derart anpasst, dass der Ist-Volumenstrom dem Soll-Volumenstrom entspricht beziehungsweise diesem angenähert wird.

Die Regelvorrichtung kann den Ist-Volumenstrom nach einem Soll-Volumenstrom mittels einer diskontinuierlichen oder kontinuierlichen Öffnung des Dosierventils regeln. Das Dosierventil kann ein Proportionalventil, Proportionalventil mit Rückschlagventil oder auch ein anderes, geeignetes Ventil sein, wobei die Regelvorrichtung den Volumenstrom durch eine kontinuierliche Einstellung und Anpassung einer Ventilöffnung regeln kann. Alternativ kann die Regelvorrichtung das Dosierventil diskontinuierlich, das heißt, durch wiederholtes Öffnen und Schließen derart regeln, dass ein Volumen von Komponentenmaterial über einen Zeitabschnitt getaktet von dem Dosierventil abgegeben wird. So wird es dann auch möglich eines der Dosierventile diskontinuierlich und das andere kontinuierlich zu öffnen. Eine kontinuierliche Öffnung kann dann vorteilhaft sein, wenn ein vergleichsweise zähflüssiges Komponentenmaterial gefördert wird oder eine besonders gute Durchmischung der Komponentenmaterialien erfolgen soll. Das Pumpensystem kann so auch an eine Viskosität von Komponentenmaterialien angepasst werden. Die Komponentenmaterialien können eine Stammkomponente A und eine Zuführkomponente B sein, wobei von der Steuervorrichtung ein Soll-Volumenstrom der Zuführkomponente nach einem Ist-Volumenstrom der Stammkomponente oder ein Soll-Volumenstrom der Stammkomponente nach einem Ist-Volumenstrom der Zuführkomponente geregelt werden kann. Ein für die Regelung maßgebliches, führendes Komponentenmaterial kann somit die Stammkomponente oder die Zuführkomponente sein.

Alternativ können die Komponentenmaterialien eine Stammkomponente und eine Zuführkomponente sein, wobei von der Steuervorrichtung ein Soll-Volumenstrom der Zuführkomponente unabhängig von einem Ist-Volumenstrom der Stammkomponente und ein Soll-Volumenstrom der Stammkomponente unabhängig von einem Ist-Volumenstrom der Zuführkomponente geregelt werden kann. Demnach ist dann keines der Komponentenmaterialien ein für eine Regelung führendes Komponentenmaterial, sondern die jeweiligen Ist-Volumenströme der Komponentenmaterialien werden nach ihren zugehörigen Soll-Volumenströmen vollkommen unabhängig voneinander geregelt.

Das erfindungsgemäße Pumpensystem zum Ausgeben von Mehrkomponentenmaterial unter Druck mit einer Spritzpistole weist eine Spritzpistole, einen Mischer und zumindest zwei Pumpen zur Förderung von Komponentenmaterialien jeweils zugeordnete Dosierventile zur Dosierung von Flüssigkeitsspeichern zur Speicherung von Komponentenmaterial auf, wobei das Pumpensystem eine Steuereinheit aufweist, wobei mittels der Steuereinheit das Pumpensystem steuerbar ist, wobei jeder der Pumpen eine elektrische Regelvorrichtung der Steuereinheit zur Regelung des Dosierventils zugeordnet ist, wobei die Steuereinheit eine Steuervorrichtung zur Regelung eines Mischungsverhältnisses der Komponentenmaterialien aufweist, wobei die Regelvorrichtungen mittels der Steuervorrichtung regelbar sind, wobei die Regelvorrichtung unmittelbar an dem Dosierventil angeordnet ist.

Erfindungsgemäß ist die Regelvorrichtung unmittelbar an dem Dosierventil angeordnet. Das Dosierventil wird dann unmittelbar von der Regelvorrichtung geregelt. Es ist dann nicht mehr erforderlich, beispielsweise einen Luftschlauch von einer Steuereinheit zur Steuerung des Dosierventils zu verwenden, dies bewirkt insbesondere auch den Nachteil, dass ein Druckimpuls über den Luftschlauch eine verzögerte Reaktion des Dosierventils bewirkt. Eine unmittelbare Anordnung der Regelvorrichtung an dem Dosierventil ermöglicht hingegen das unmittelbare Auslösen eines Impulses am Dosierventil. Auch ist die unmittelbare Anordnung der Regelvorrichtung am Dosierventil dann besonders vorteilhaft, wenn die Regelvorrichtung explosionsgeschützt ausgebildet ist.

Zu den vorteilhaften Wirkungen des erfindungsgemäßen Pumpensystems wird auf die Vorteilsbeschreibung des erfindungsgemäßen Verfahrens verwiesen.

Das Pumpensystem wird besonders einfach ausbildbar, wenn die Steuereinheit einen Datenbus aufweist, der die Steuervorrichtung mit den Regelvorrichtungen verbindet. Der Datenbus kann ein kabelgebundener Bus oder auch ein kabelloser Bus in Form eines Verbindungsnetzwerkes sein. Unter einem Datenbus wird daher ein Verbindungsnetzwerk verstanden, welches ein Protokoll zur Datenübertragung verwendet. Dadurch, dass die Steuereinheit einen Datenbus aufweist, kann auf eine aufwendige Verkabelung von elektrischen Komponenten der Steuereinheit untereinander verzichtet werden. Insbesondere kann eine Vielzahl von Kabeln und damit auch Bauraum eingespart werden. Auch wird die Steuereinheit einfach erweiterbar, dadurch, dass weitere elektrische Bauteile einfach an den Datenbus angeschlossen werden können.

Die Pumpe kann eine Kolbenpumpe sein, wobei die Pumpe einen Wegmesssensor zur Messung eines Ist-Volumenstroms beziehungsweise Volumenstroms des mit der Pumpe geförderten Komponentenmaterials mittels der Steuervorrichtung aufweisen kann. Der Wegmesssensor kann eine Stellung eines Kolbens der Kolbenpumpe sowie dessen Weg innerhalb eines Zeitabschnitts detektieren, sodass eine Menge des mit der Kolbenpumpe geförderten Komponentenmaterials in dem Zeitabschnitt gemessen werden kann. Die Kolbenpumpe kann eine pneumatisch, hydraulisch oder elektrisch angetriebene Pumpe sein. Alternativ kann die Pumpe eine Rotationspumpe mit einem entsprechenden Antrieb sein, wobei dann die Pumpe keinen Wegmesssensor aufweisen muss.

Die Regelvorrichtung kann einen Durchflussmengensensor zur Messung eines Volumenstroms des mit der Pumpe geförderten Komponentenmaterials mittels der Steuervorrichtung aufweisen. Mittels des Durchflussmengensensors wird es möglich einen Ist-Volumenstrom des das Dosierventil passierenden Komponentenmaterials zu messen, unabhängig von der Art der das Komponentenmaterial fördernden Pumpe. Gleichwohl kann ergänzend zum Durchflussmengensensor ein Wegmesssensor zur Messung eines Ist-Volumenstroms an der Pumpe vorgesehen sein. Wenn die Regelvorrichtung den Durchflussmengensensor aufweist, kann die Regelvorrichtung durch eine Betätigung des zugeordneten Dosierventils unmittelbar eine Regelung des Ist-Volumenstroms nach einem Soll-Volumenstrom, welcher durch die Steuervorrichtung vorgegeben sein kann, vornehmen.

Die Steuervorrichtung und die Regelvorrichtungen können jeweils in einem eigenen Gehäuse angeordnet sein, wobei die Regelvorrichtungen örtlich von der Steuervorrichtung beabstandet sein können. Das heißt die Steuervorrichtung kann in einem eigenen Gehäuse und jede der Regelvorrichtungen kann ebenfalls in einem eigenen Gehäuse angeordnet sein. Dadurch wird es möglich die Regelvorrichtungen örtlich unabhängig voneinander und örtlich unabhängig von der Steuervorrichtung zu positionieren beziehungsweise am Pumpensystem zu verbauen. Dadurch wird das Pumpensystem insgesamt flexibler ausbildbar.

Bevorzugt können die Steuervorrichtung und die Regelvorrichtungen explosionsgeschützt ausgebildet sein. Dies kann beispielsweise dadurch erzielt werden, dass diese in abgeschlossenen Gehäusen angeordnet werden. Diese Gehäuse können dann jeweils als eine druckgekapselte Einheit zusammen mit den Regelvorrichtungen beziehungsweise der Steuervorrichtung nach den ATEX-Leitlinien zum Explosionsschutz gemäß Produktrichtlinie 2014/34/EU und Betriebsrichtlinie 1999/92/EG in der vor dem Prioritätstag dieser Anmeldung zuletzt gültigen Fassung ausgebildet sein. So kann ein besonders sicherer Betrieb des Pumpensystems gewährleistet werden. Sofern die Steuervorrichtung und die Regelvorrichtungen unabhängig voneinander ATEX-konform ausgebildet sind, ist es nicht mehr erforderlich, für die Steuereinheit einen Nachweis einer ATEX-Konformität zu erbringen. Bei einer Erweiterung des Pumpensystems mit einer weiteren Farbe beziehungsweise einem weiteren Komponentenmaterial und einer zugehörigen Pumpe kann dann dem Pumpensystem eine Regelvorrichtung hinzugefügt werden, deren ATEX-Konformität bereits festgestellt wurde. Sofern die bereits verbaute Steuervorrichtung und die Regelvorrichtungen ebenfalls ATEX-konform sind, ist eine wiederholte Konformitätsfeststellung nicht mehr erforderlich. Dadurch wird ein individueller Aufbau eines Pumpensystems beziehungsweise einer Erweiterung eines Pumpensystems möglich ohne eine kostenintensive ATEX-Konformitätsfeststellung des Gesamtsystems der Steuereinheit durchführen zu müssen.

Das Pumpensystem wird noch kostengünstiger herstellbar, wenn die Regelvorrichtungen gleichartig ausgebildet sind. Dies kann beispielsweise dadurch verwirklicht werden, dass die Regelvorrichtung eine Einrichtung zur Datenverarbeitung umfasst, die eine individuelle Anpassung der Regelvorrichtung über ein mit der Einrichtung zur Datenverarbeitung ausgeführtes Computerprogrammprodukt ermöglicht. In Verbindung mit einem Datenbus wird es dann möglich eine beliebige Anzahl von Regelvorrichtungen mit der Steuervorrichtung zu verbinden und anzupassen.

Die Dosierventile können zusammen mit den Regelvorrichtungen eine Ventilanordnung ausbilden, wobei die Regelvorrichtungen unmittelbar benachbart angeordnet sein können. Insbesondere, wenn die Regelvorrichtungen gleichartig ausgebildet sind, können die Regelvorrichtungen beziehungsweise deren Gehäuse über jeweils Verbindungseinrichtungen miteinander verbunden werden. Die Verbindungseinrichtungen können elektrische und/oder pneumatische Stecker oder Kupplungen umfassen. Beispielsweise kann dann eine Druckluftleitung durch eine Stapelanordnung von Regelvorrichtungen hindurch geführt sein, so, dass die Regelvorrichtungen mit Hilfsluft zur Betätigung der Dosierventile versorgt werden können und alleine eine Druckluftleitung benötigt wird. Auch wird ein einfacher Anschluss der Regelvorrichtungen an einen Datenbus ermöglicht. Die so ausgebildete Ventilanordnung kann prinzipiell räumlich unabhängig von der Steuervorrichtung an dem Pumpensystem angeordnet werden. Eine Erweiterung des Pumpensystems um weitere Farben beziehungsweise Pumpen für Komponentenmaterial kann dann dadurch erfolgen, dass neben einer weiteren Pumpe der Ventilanordnung lediglich eine Regelvorrichtung mit einem Dosierventil, welches der weiteren Pumpe zugeordnet ist, hinzugefügt wird, ohne dass die vorhandenen Regelvorrichtungen und die Steuervorrichtung ausgetauscht oder verändert werden müssten.

Folglich kann die Ventilanordnung mit Dosierventilen modular erweiterbar ausgebildet sein. Dann ist es möglich zur Herstellung verschiedenster Pumpensysteme stets eine Art einer Steuervorrichtung und einer Regelvorrichtung zu verwenden, wobei eine Anpassung an das herzustellende Pumpensystem dadurch erfolgt, dass eine Anzahl der Regelvorrichtungen ausgewählt werden kann. Weiter ist es möglich eine Software beziehungsweise ein Computerprogrammprodukt der Steuervorrichtung und der Regelvorrichtungen entsprechend dem gewünschten Steuerungsverfahren des Pumpensystems ohne großen Aufwand anzupassen.

Weitere vorteilhafte Ausführungsformen des Pumpensystems ergeben sich aus den Merkmalsbeschreibungen der auf den Verfahrensanspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig.** 1: eine schematische Darstellung einer Ausführungsform eines Pumpensystems;
- Fig. 2: eine schematische Darstellung einer Ventilanordnung.

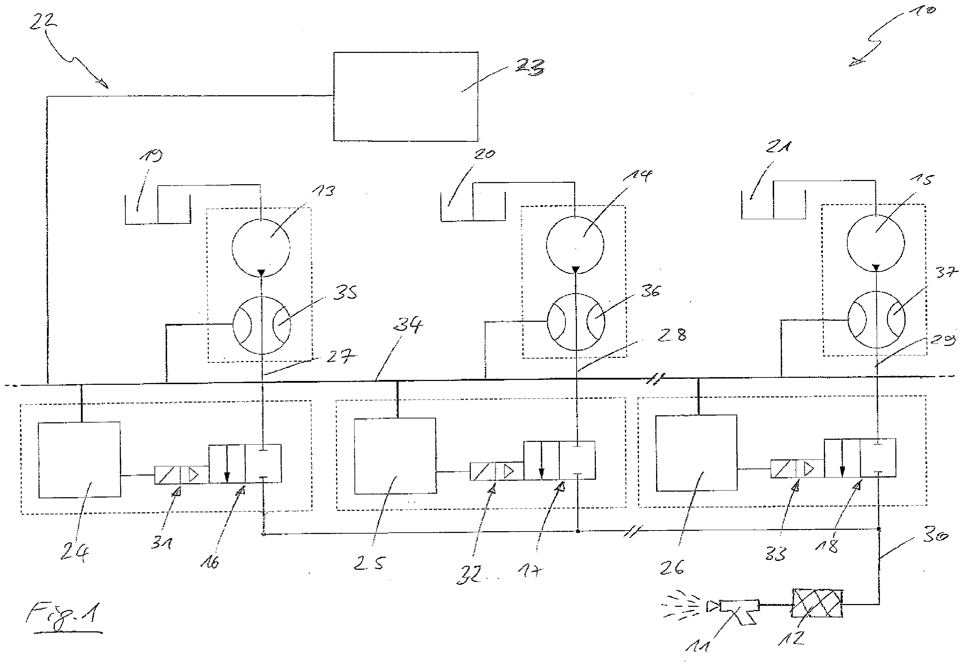

Die **Fig. 1** zeigt eine schematische Darstellung eines Pumpensystems 10, wobei das Pumpensystem 10 eine Spritzpistole 11, einen Mischer 12 und Pumpen 13, 14 und 15 zur Förderung von Komponentenmaterial und jeweils zugeordnete Dosierventile 16, 17 und 18 zur Dosierung des Komponentenmaterials sowie Flüssigkeitsspeicher 19, 20 und 21 zur Speicherung des Komponentenmaterials umfasst. Weiter umfasst das Pumpensystem 10 eine Steuereinheit 22, die aus einer Steuervorrichtung 23 und Regelvorrichtungen 24, 25 und 26 ausgebildet ist. Die Dosierventile 16, 17 und 18 sind jeweils den Pumpen 13, 14 beziehungsweise 15 zugeordnet und über Förderleitungen 27, 28 und 29 mit diesen verbunden. Die geförderten Komponentenmaterialien werden nachfolgend den Dosierventilen 16, 17 und 18 in einer Förderleitung 30 gesammelt und dem Mischer 12 sowie der Spritzpistole 11 zugeführt. In dem Mischer 12 werden die Komponentenmaterialien zu dem Mehrkomponentenmaterial vermischt. Die elektrischen Regelvorrichtungen 24, 25 und 26 sind ebenfalls den Pumpen 13, 14 beziehungsweise 15 und damit auch den Dosierventilen 16, 17 beziehungsweise 18 zugeordnet. Die Regelvorrichtungen 24, 25 und 26 steuern eine Betätigungseinrichtung 31, 32 beziehungsweise 33 der Dosierventile 16, 17 beziehungsweise 18 zum Öffnen, Schließen oder Einstellen der Dosierventile 16, 17 beziehungsweise 18 derart, dass eine Regelung dieser erfolgt. Weiter werden die Regelvorrichtungen 24, 25 und 26 von der Steuervorrichtung 23 als ein Führungsregler in Art einer Kaskadenregelung geregelt.

Die Steuereinheit 22 umfasst einen Datenbus 34, an dem hier die Steuervorrichtung 23, die Regelvorrichtungen 24, 25 und 26 sowie Sensoren 35, 36 und 37 zur Messung eines Volumenstroms angeschlossen sind. Die Sensoren 35, 36 und 37 können Durchflussmengensensoren oder auch Wegmesssensoren an den Pumpen 13, 14 beziehungsweise 15 sein.

Mit den Sensoren 35, 36 und 37 wird ein Ist-Volumenstrom von Komponentenmaterial der jeweiligen Pumpe 13, 14 beziehungsweise 15 gemessen und an die Steuervorrichtung 23 über den Datenbus 34 übermittelt. Die Steuervorrichtung 23 gibt dann den Regelvorrichtungen 24, 25 und 26 über den Datenbus 34 jeweils Soll-Volumenströme für das Komponentenmaterial entsprechend dem gewünschten Mischungsverhältnis des Komponentenmaterials vor. Die Regelvorrichtungen 24, 25 und 26 regeln ihrerseits über die jeweiligen Betätigungseinrichtungen 31, 32 beziehungsweise 33 die Dosierventile 16, 17 beziehungsweise 18, derart, dass der jeweilige Ist-Volumenstrom an den Soll-Volumenstrom angenähert wird. Die Dosierventile 16, 17 und 18 können dabei völlig unabhängig voneinander diskontinuierlich oder kontinuierlich beziehungsweise eingestellt oder getaktet geregelt werden. Die Steuervorrichtung 23 und zumindest die jeweiligen Regelvorrichtungen 24, 25 und 26 sind jeweils in einem eigenen, hier nicht dargestellten Gehäuse, welches explosionsgeschützt ausgebildet ist, angeordnet.

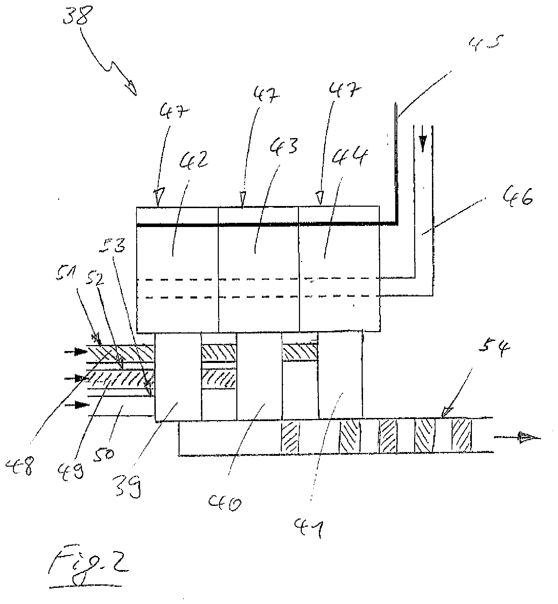

Die **Fig. 2** zeigt eine Ventilanordnung 38 eines hier nicht näher dargestellten Pumpensystems, wobei die Ventilanordnung 38 Dosierventile 39, 40 und 41 mit jeweils zugeordneten Regelvorrichtungen 42, 43 beziehungsweise 44 umfasst. Die Regelvorrichtungen 42, 43 und 44 sind unmittelbar an den Dosierventilen 39, 40 beziehungsweise 41 angeordnet, gleichartig ausgebildet und miteinander verbunden. Weiter sind die Regelvorrichtungen 42, 43 und 44 an einem Datenbus 45 angeschlossen, der die Regelvorrichtungen 42, 43 und 44 mit einer hier nicht dargestellten und beabstandet angeordneten Steuervorrichtung verbindet. Auch sind die Regelvorrichtungen 42, 43 und 44 an einer Druckluftleitung 46 zur Betätigung der Dosierventile 39, 40 und 41 angeschlossen und weisen jeweils ein gekapseltes, explosionsgeschütztes eigenes Gehäuse 47 auf. Verschiedene Komponentenmaterialien 48, 49 und 50 werden in Förderleitungen 51, 52 beziehungsweise 53 den Dosierventilen 39, 40 beziehungsweise 41 zugeführt und in eine, einem hier nicht dargestellten Mischer vorgeschaltete Förderleitung 54 dosiert.

## Patentansprüche

1. Verfahren zur Steuerung eines Pumpensystems (10), wobei Mehrkomponentenmaterial unter Druck mit einem Mischer (12) und einer Spritzpistole (11) des Pumpensystems ausgegeben wird, wobei Komponentenmaterial (48, 49, 50) mit zumindest zwei Pumpen (13, 14, 15) des Pumpensystems gefördert wird, wobei das Komponentenmaterial mit jeweils den Pumpen zugeordneten Flüssigkeitsspeichern (19, 20, 21) des Pumpensystems gespeichert wird, wobei das Komponentenmaterial mit jeweils den Pumpen zugeordneten Dosierventilen (16, 17, 18, 39, 40, 41) des Pumpensystems dosiert wird, wobei mittels einer Steuereinheit (22) des Pumpensystems das Pumpensystem gesteuert wird,
**dadurch gekennzeichnet,**
**dass** die Dosierventile jeweils mit einer elektrischen Regelvorrichtung (24, 25, 26, 42, 43, 44) der Steuereinheit geregelt werden, wobei ein Mischungsverhältnis der Komponentenmaterialien mit einer Steuervorrichtung (23) der Steuereinheit geregelt wird, wobei die Regelvorrichtungen mittels der Steuervorrichtung geregelt werden, wobei ein Ist-Volumenstrom von Komponentenmaterial der jeweiligen Pumpe gemessen wird, wobei die Steuervorrichtung die jeweiligen Ist-Volumenströme erfasst und den Regelvorrichtungen jeweils einen Soll-Volumenstrom entsprechend dem Mischungsverhältnis vorgibt.

2. Verfahren nach Anspruch 1,
**dadurch gekennzeichnet,**
**dass** die Steuervorrichtung als ein Führungsregler einer Kaskadenregelung die Regelvorrichtungen regelt.

3. Verfahren nach Anspruch 1 oder 2,
**dadurch gekennzeichnet,**
**dass** mittels eines Datenbusses (34, 45) der Steuereinheit (22) Daten zwischen der Steuervorrichtung (23) und den Regelvorrichtungen (24, 25, 26, 42, 43, 44) ausgetauscht werden.

4. Verfahren nach Anspruch 3,
**dadurch gekennzeichnet,**
**dass** mittels des Datenbusses (34, 45) Daten zwischen der Steuervorrichtung (23) und den Pumpen (13, 14, 15) ausgetauscht werden.

5. Verfahren nach einem der vorangehenden Ansprüche,
**dadurch gekennzeichnet,**
**dass** ein Ist-Volumenstrom zumindest eines der Komponentenmaterialien (48, 49, 50) an einem Dosierventil (16, 17, 18, 39, 40, 41) mittels eines Sensors (35, 36, 37) ermittelt und an die Steuervorrichtung (23) und/oder Regelvorrichtung (24, 25, 26, 42, 43, 44) übermittelt wird.

6. Verfahren nach Anspruch 5,
**dadurch gekennzeichnet,**
**dass** die Steuervorrichtung (23) den Ist-Volumenstrom des Komponentenmaterials (48, 49, 50) über die Regelvorrichtung (24, 25, 26, 42, 43, 44) des Dosierventils (16, 17, 18, 39, 40, 41) regelt.

7. Verfahren nach Anspruch 5 oder 6,
**dadurch gekennzeichnet,**
**dass** die Regelvorrichtung (24, 25, 26, 42, 43, 44) den Ist-Volumenstrom nach einem Soll-Volumenstrom mittels einer diskontinuierlichen oder kontinuierlichen Öffnung des Dosierventils (16, 17, 18, 39, 40, 41) regelt.

8. Verfahren nach einem der vorangehenden Ansprüche ,
**dadurch gekennzeichnet,**
**dass** die Komponentenmaterialien (48, 49, 50) eine Stammkomponente (A) und eine Zuführkomponente (B) sind, wobei von der Steuervorrichtung (23) ein Soll-Volumenstrom der Zuführkomponente nach einem Ist-Volumenstrom der Stammkomponente oder ein Soll-Volumenstrom der Stammkomponente nach einem Ist-Volumenstrom der Zuführkomponente geregelt wird.

9. Verfahren nach einem der vorangehenden Ansprüche ,
**dadurch gekennzeichnet,**
**dass** die Komponentenmaterialien (48, 49, 50) eine Stammkomponente (A) und eine Zuführkomponente (B) sind, wobei von der Steuervorrichtung (23) ein Soll-Volumenstrom der Zuführkomponente unabhängig von einem Ist-Volumenstrom der Stammkomponente und ein Soll-Volumenstrom der Stammkomponente unabhängig von einem Ist-Volumenstrom der Zuführkomponente geregelt wird.

10. Pumpensystem (10) zum Ausgeben von Mehrkomponentenmaterial unter Druck mit einer Spritzpistole (11), wobei das Pumpensystem eine Spritzpistole (11), einen Mischer (12) und zumindest zwei Pumpen (13, 14, 15) zur Förderung von Komponentenmaterial (48, 49, 50) und jeweils zugeordnete Dosierventile (16, 17, 18, 39, 40, 41) zur Dosierung und Flüssigkeitsspeicher (19, 20, 21) zur Speicherung von Komponentenmaterial aufweist, wobei das Pumpensystem eine Steuereinheit (22) aufweist, wobei mittels der Steuereinheit das Pumpensystem steuerbar ist,
**dadurch gekennzeichnet,**
**dass** jeder der Pumpen eine elektrische Regelvorrichtung (24, 25, 26, 42, 43, 44) der Steuereinheit zur Regelung des Dosierventils zugeordnet ist, wobei die Steuereinheit eine Steuervorrichtung (23) zur Regelung eines Mischungsverhältnisses der Komponentenmaterialien aufweist, wobei die Regelvorrichtungen mittels der Steuervorrichtung regelbar sind, wobei die Regelvorrichtung unmittelbar an dem Dosierventil angeordnet ist.

11. Pumpensystem nach Anspruch 10 ,
**dadurch gekennzeichnet,**
**dass** die Steuereinheit einen Datenbus (34, 45) aufweist, der die Steuervorrichtung (23) mit den Regelvorrichtungen (24, 25, 26, 42, 43, 44) verbindet.

12. Pumpensystem nach Anspruch 10 oder 11 ,
**dadurch gekennzeichnet,**
**dass** die Pumpe (13, 14, 15) eine Kolbenpumpe ist, wobei die Pumpe einen Wegmesssensor zur Messung eines Ist-Volumenstroms des mit der Pumpe geförderten Komponentenmaterials (48, 49, 50) mittels der Steuervorrichtung (23) aufweist.

13. Pumpensystem nach einem der Ansprüche 10 bis 12 ,
**dadurch gekennzeichnet,**
**dass** die Regelvorrichtung (24, 25, 26, 42, 43, 44) einen Durchflussmengensensor zur Messung eines Volumenstroms des mit der Pumpe (13, 14, 15) geförderten Komponentenmaterials (48, 49, 50) mittels der Steuervorrichtung (23) aufweist.

14. Pumpensystem nach einem der Ansprüche 10 bis 13 ,
**dadurch gekennzeichnet,**
**dass** die Steuervorrichtung (23) und die Regelvorrichtungen (24, 25, 26, 42, 43, 44) jeweils in einem eigenen Gehäuse (47) angeordnet sind, wobei die Regelvorrichtungen örtlich von der Steuervorrichtung beabstandet positioniert sind.

15. Pumpensystem nach einem der Ansprüche 10 bis 14 ,
**dadurch gekennzeichnet,**
**dass** die Steuervorrichtung (23) und die Regelvorrichtungen (24, 25, 26, 42, 43, 44) explosionsgeschützt ausgebildet sind.

16. Pumpensystem nach einem der Ansprüche 10 bis 15 ,
**dadurch gekennzeichnet,**
**dass** die Regelvorrichtungen (24, 25, 26, 42, 43, 44) gleichartig ausgebildet sind.

17. Pumpensystem nach einem der Ansprüche 10 bis 16 ,
**dadurch gekennzeichnet,**
**dass** die Dosierventile (16, 17, 18, 39, 40, 41) zusammen mit den Regelvorrichtungen (24, 25, 26, 42, 43, 44) eine Ventilanordnung (38) ausbilden, wobei die Regelvorrichtungen unmittelbar benachbart angeordnet sind.

18. Pumpensystem nach Anspruch 17 ,
**dadurch gekennzeichnet,**
**dass** die Ventilanordnung (38) mit Dosierventilen (16, 17, 18, 39, 40, 41) modular erweiterbar ausgebildet ist.

## Claims

1. A method for controlling a pump system (10), multi-component material being dispensed under pressure using a mixer (12) and a spray gun (11) of the pump system, component material (48, 49, 50) being pumped using at least two pumps (13, 14, 15) of the pump system, said component material being stored in liquid tanks (19, 20, 21) of the pump system each allocated to the pumps, said component material being dosed using dosage valves (16, 17, 18, 39, 40, 41) of the pump system each allocated to the pumps, said pump system being controlled by means of a control unit (22) of the pump system,
**characterized in that**
the dosage valves are each regulated using an electric regulating device (24, 25, 26, 42, 43, 44) of the control unit, a mixing ratio of the component materials being regulated using a control device (23) of the control unit, said regulating devices being regulated by means of the control device, an actual volume flow of component material of the respective pump being measured, the control device capturing the respective actual volume flows and specifying a target volume flow for the respective regulating device according to the mixing ratio.

2. The method according to claim 1,
**characterized in that**
the control device regulates the regulating device as a guiding regulator of a cascade regulation.

3. The method according to claim 1 or 2,
**characterized in that**
data can be exchanged between the control device (23) and the regulating devices (24, 25, 26, 42, 43, 44) by means of a data bus (34, 45) of the control unit (22).

4. The method according to claim 3,
**characterized in that**
data is exchanged between the control device (23) and the pumps (13, 14, 15) by means of the data bus (34, 35).

5. The method according to any one of the preceding claims,
**characterized in that**
an actual volume flow of at least one of the component materials (48, 49, 50) is detected at a dosage valve (16, 17, 18, 39, 40, 41) by means of a sensor (35, 36, 37) and is transferred to the control device (23) and/or the regulating device (24, 25, 26, 42, 43, 44).

6. The method according to claim 5,
**characterized in that**
the control device (23) regulates the actual volume flow of the component material (48, 49, 50) via the regulating device (24, 25, 26, 42, 43, 44) of the dosage valve (16, 17, 18, 39, 40, 41).

7. The method according to claim 5 or 6,
**characterized in that**
the regulating device (24, 25, 26, 42, 43, 44) regulates the actual volume flow according to a target volume flow by means of a discontinuous or continuous opening of the dosage valve (16, 17, 18, 39, 40, 41).

8. The method according to any one of the preceding claims,
**characterized in that**
the component materials (48, 49, 50) are a basic component (A) and a feed component (B), a target volume flow of the feed component being regulated by the control device (23) according to an actual volume flow of the basic component or a target volume flow of the basic component being regulated by the control device (23) according to an actual volume flow of the feed component.

9. The method according to any one of the preceding claims,
**characterized in that**
the component materials (48, 49, 50) are a basic component (A) and a feed component (B), a target volume flow of the feed component being regulated by the control device (23) independently of an actual volume flow of the basic component and a target volume flow of the basic component being regulated by the control device (23) independently of an actual volume flow of the feed component.

10. A pump system (10) for dispensing multi-component material under pressure using a spray gun (11), said pump system comprising a spray gun (11), a mixer (12) and at least two pumps (13, 14, 15) for pumping component material (48, 49, 50) as well as accordingly allocated dosage valves (16, 17, 18, 39, 40, 41) for dosing and a liquid tank (19, 20, 21) for storing component material, said pump system comprising a control unit (22), said pump being able to be controlled by means of the control unit,
**characterized in that**
each of the pumps has an electric regulating device (24, 25, 26, 42, 43, 44) of the control unit allocated to it for regulating the dosage valve, said control unit comprising a control device (23) for regulating a mixing ratio of the component materials, said regulating devices being able to be regulated by means of the control device, the regulating device being disposed directly on the dosage valve.

11. The pump system according to claim 10,
**characterized in that**
the control unit comprises a data bus (34, 35) which connects the control device (23) to the regulating devices (24, 25, 26, 42, 43, 44).

12. The pump system according to claim 10 or 11,
**characterized in that**
the pump (13, 14, 15) is a piston pump, said pump comprising a path measuring sensor for measuring an actual volume flow of the component material (48, 49, 50), which is pumped using the pump, by means of the control device (23).

13. The pump system according to any one of the claims 10 to 12,
**characterized in that**
the regulating device (24, 25, 26, 42, 43, 44) comprises a flow-through-amount sensor for measuring a volume flow of the component material (48, 49, 50), which is pumped using the pump (13, 14, 15), by means of the control device (23).

14. The pump system according to any one of the claims 10 to 13,
**characterized in that**
the control device (23) and the regulating devices (24, 25, 26, 42, 43, 44) are each disposed in their own casing (47), said regulating devices being positioned spatially distanced from the control device.

15. The pump system according to any one of the claims 10 to 14,
**characterized in that**
the control device (23) and the regulating devices (24, 25, 26, 42, 43, 44) are realized so as to be explosion-proof.

16. The pump system according to any one of the claims 10 to 15,
**characterized in that**
the regulating devices (24, 25, 26, 42, 43, 44) are realized in the same manner.

17. The pump system according to any one of the claims 10 to 16,
**characterized in that**
the dosage valves (16, 17, 18, 39, 40, 41) form a valve arrangement (38) in conjunction with the regulating devices (24, 25, 26, 42, 43, 44), said regulating devices being disposed directly adjacent.

18. The pump system according to claim 17,
**characterized in that**
the valve arrangement (38) having dosage valves (16, 17, 18, 39, 40, 41) is realized so as to be modularly expandable.

## Revendications

1. Procédé de commande d'un système à pompes (10), du matériau multi-composant étant déchargé sous pression en utilisant un mélangeur (12) et un pistolet pulvérisateur (11) du système à pompes, du matériau composant (48, 49, 50) étant pompé en utilisant au moins deux pompes (13, 14, 15) du système à pompes, le matériau composant étant entreposé dans des réservoirs à liquide (19, 20, 21) du système à pompes qui sont associés chacun aux pompes, le matériau composant étant dosé en utilisant des vannes de dosage (16, 17, 18, 39, 40, 41) du système à pompes qui sont associées chacune aux pompes, le système à pompes étant commandé au moyen d'une unité de commande (22) du système à pompes,
**caractérisé en ce que**
les vannes de dosage sont régulées chacune en utilisant un dispositif de réglage (24, 25, 26, 42, 43, 44) électrique de l'unité de commande, un rapport de mélange des matériaux composants étant régulé en utilisant un dispositif de commande (23) de l'unité de commande, les dispositifs de réglage étant régulés au moyen du dispositif de commande, un débit volumique effectif du matériau composant de la pompe respective étant mesuré, le dispositif de commande enregistrant les débits volumiques effectifs respectifs et spécifiant un débit volumique de consigne pour chaque dispositif de réglage selon le rapport de mélange.

2. Procédé selon la revendication 1,
**caractérisé en ce que**
le dispositif de commande régule les dispositifs de réglage comme régulateur de guidage d'une régulation en cascade.

3. Procédé selon la revendication 1 ou 2,
**caractérisé en ce que**
des données sont échangées entre le dispositif de commande (23) et les dispositifs de réglage (24, 25, 26, 42, 43, 44) au moyen d'un bus de données (34, 45) de l'unité de commande (22).

4. Procédé selon la revendication 3,
**caractérisé en ce que**
des données sont échangées entre le dispositif de commande (23) et les pompes (13, 14, 15) au moyen du bus de données (34, 35).

5. Procédé selon l'une quelconque des revendications précédentes,
**caractérisé en ce**
**qu'**un débit volumique effectif d'au moins un des matériaux composants (48, 49, 50) est déterminé à une vanne de dosage (16, 17, 18, 39, 40, 41) au moyen d'un capteur (35, 36, 37) et est transféré au dispositif de commande (23) et/ou au dispositif de réglage (24, 25, 26, 42, 43, 44).

6. Procédé selon la revendication 5,
**caractérisé en ce que**
le dispositif de commande (23) régule le débit volumique effectif du matériau composant (48, 49, 50) par le dispositif de réglage (24, 25, 26, 42, 43, 44) de la vanne de dosage (16, 17, 18, 39, 40, 41).

7. Procédé selon la revendication 5 ou 6,
**caractérisé en ce que**
le dispositif de réglage (24, 25, 26, 42, 43, 44) régule le débit volumique effectif selon l'un débit volumique de consigne en ouvrant de manière continue ou discontinue la vanne de dosage (16, 17, 18, 39, 40, 41).

8. Procédé selon l'une quelconque des revendications précédentes,
**caractérisé en ce que**
les matériaux composants (48, 49, 50) sont un composant de base (A) et un composant d'alimentation (B), un débit volumique de consigne du composant d'alimentation étant régulé par le dispositif de commande (23) selon un débit volumique effectif du composant de base ou un débit volumique de consigne du composant de base étant régulé par le dispositif de commande (23) selon un débit volumique effectif du composant d'alimentation.

9. Procédé selon l'une quelconque des revendications précédentes,
**caractérisé en ce que**
les matériaux composants (48, 49, 50) sont un composant de base (A) et un composant d'alimentation (B), un débit volumique de consigne du composant d'alimentation étant régulé par le dispositif de commande (23) indépendamment d'un débit volumique effectif du composant de base et un débit volumique de consigne du composant de base étant régulé par le dispositif de commande (23) indépendamment d'un débit volumique effectif du composant d'alimentation.

10. Système à pompes (10) pour décharger du matériau multi-composant sous pression en utilisant un pistolet pulvérisateur (11), le système à pompes comprenant un pistolet pulvérisateur (11), un mélangeur (12) et au moins deux pompes (13, 14, 15) pour pomper du matériau composant (48, 49, 50) et des vannes de dosage (16, 17, 18, 39, 40, 41) associées correspondamment pour le dosage et des réservoirs à liquide (19, 20, 21) pour l'entreposage du matériau composant, le système à pompes comprenant une unité de commande (22), le système à pompes pouvant être contrôlé au moyen de l'unité de commande,
**caractérisé en ce**
**qu'**un dispositif de réglage (24, 25, 26, 42, 43, 44) électrique de l'unité de commande est associé à chaque pompe pour réguler la vanne de dosage, l'unité de commande comprenant un dispositif de commande (23) pour réguler un rapport de mélange des matériaux composants, les dispositifs de réglage pouvant être régulés au moyen du dispositif de commande, le dispositif de réglage étant disposé directement sur la vanne de dosage.

11. Système à pompes selon la revendication 10,
**caractérisé en ce que**
l'unité de commande comprend un bus de données (34, 45) qui relie le dispositif de commande (23) aux dispositifs de réglage (24, 25, 26, 42, 43, 44).

12. Système à pompes selon la revendication 10 ou 11,
**caractérisé en ce que**
la pompe (13, 14, 15) est une pompe à piston, la pompe comprenant un capteur de tachymètre pour mesurer au moyen du dispositif de commande (23) un débit volumique effectif du matériau composant (48, 49, 50) qui est pompé en utilisant la pompe.

13. Système à pompes selon l'une quelconque des revendications 10 à 12,
**caractérisé en ce que**
le dispositif de réglage (24, 25, 26, 42, 43, 44) comprend un capteur de quantité de débit pour mesurer au moyen du dispositif de commande (23) un débit volumique du matériau composant (48, 49, 50) qui est pompé en utilisant la pompe (13, 14, 15).

14. Système à pompes selon l'une quelconque des revendications 10 à 13,
**caractérisé en ce que**
le dispositif de commande (23) et les dispositifs de réglage (24, 25, 26, 42, 43, 44) sont disposés chacun dans son propre boîtier (47), les dispositifs de réglage étant disposés espacés spatialement du dispositif de commande.

15. Système à pompes selon l'une quelconque des revendications 10 à 14,
**caractérisé en ce que**
le dispositif de commande (23) et les dispositifs de réglage (24, 25, 26, 42, 43, 44) sont réalisés de manière à être résistants à l'explosion.

16. Système à pompes selon l'une quelconque des revendications 10 à 15,
**caractérisé en ce que**
les dispositifs de réglage (24, 25, 26, 42, 43, 44) sont réalisés de la même manière.

17. Système à pompes selon l'une quelconque des revendications 10 à 16,
**caractérisé en ce que**
les vannes de dosage (16, 17, 18, 39, 40, 41) forme un ensemble de vannes (38) conjointement avec les dispositifs de réglage (24, 25, 26, 42, 43, 44), les dispositifs de réglage étant disposés directement adjacents.

18. Système à pompes selon la revendication 17,
**caractérisé en ce que**
l'ensemble de vannes (38) est réalisé de manière à être extensible modulairement par des vannes de dosage (16, 17, 18, 39, 40, 41).
